# EUROPÄISCHE PATENTSCHRIFT

(11) **EP 2 031 943 B1**
(45) Veröffentlichungstag und Bekanntmachung des Hinweises auf die Patenterteilung: **06.07.2011**
(21) Anmeldenummer: 08009877.5
(22) Anmeldetag: 30.05.2008
(51) Int. Cl.: H05B 37/02, G05D 23/19

(54) **Anwesenheitsmelder**
Presence detector
Avertisseur de présence

(30) Priorität: 31.08.2007 DE 102007041548
(43) Veröffentlichungstag der Anmeldung: 04.03.2009
(73) Patentinhaber: ABB AG, 68309 Mannheim (DE)
(72) Erfinder: Geogi, Dieter, Dipl.-Ing., 58313 Herdecke (DE); Schallenberg, Wolfgang, 40599 Düsseldorf (DE); Wieske, Stefan, 58285 Geverlsberg (DE); Zapp, Robert, 58579 Schalksmühle (DE); Schramm, Peter, Dipl.-Ing., 44265 Dortmund (DE)
(74) Vertreter: Partner, Lothar

(56) Entgegenhaltungen:
- EP-A- 0 838 792
- WO-A-85/05753
- US-B1- 6 522 078

## Beschreibung

Die Erfindung betrifft einen Anwesenheitsmelder und kann im Bereich der Personenerfassung und Meldesysteme verwendet werden.

Bei der herkömmlichen Bewegungsmeldung werden z. B. Schaltbefehle für eine Leuchte und/oder Meldebefehle ausgelöst, wenn sich Personen im Erfassungsbereich bewegen. Nachteilig hierbei ist, dass es zu unerwünschten Abschaltungen der Leuchte kommt, wenn sich die Person zwar noch im Erfassungsbereich befindet, aber sich nicht mehr ausreichend bewegt. Dieser Nachteil wird in der Praxis üblicherweise durch eine lange Nachlaufzeit (Ausschaltverzögerung) der Leuchte nach der letzten Erfassung kompensiert. Hierdurch geht jedoch ein großes Einsparpotential verloren, d. h. die Leuchte muss relativ lange und oft in unnötiger Weise mit Energie versorgt werden.

Aus der US 6 522 078 B1 ist ein "remotely controlled power supply switching system" bekannt, bestehend aus zwei separaten Geräten, nämlich einem "remote controller" im Sinne einer Erfassungseinheit und einem "controller" im Sinne einer Schalteinheit. Die Erfassungseinheit weist einen "human body detector" mit "pyro-sensor", einen "timer" und einen "light sensor" auf. Die Signalübertragung zwischen beiden Geräten erfolgt per "near-infrared rays" oder auch allgemein unter Verwendung von "wireless receivern" und "wireless signals".

Aus der WO 85/05753 A ist ein "energy control system" mit einem auf logische Schaltkreise einwirkenden "detector" respektive "presence sensor" vom "microwave type" oder "infrared type" bekannt. Des Weiteren werden Signale eines "ambient light sensors" berücksichtigt. Zudem ist ein "timing circuit" zur Ausschaltverzögerung vorgesehen. Aufgabe und Ziel dieser bekannten Konfiguration ist das Abschalten von Beleuchtung und Heizung in all denjenigen Fällen, in denen Personen nicht detektiert werden. Eine Trennung zwischen Erfassungseinheit und Schalteinheit ist vorgesehen, wobei eine leitungsgebunde Kommunikation erfolgt.

Aus der EP 0 838 792 A ist ein "multifunction occupancy sensor" (Anwesenheitssensor mit mehreren Funktionen) bekannt, wobei eine Aufteilung in zwei separate Geräte, nämlich einen "multifunction sensor" und einen "lighting controller" erfolgt. Für die Verbindung dieser beiden Geräte ist ein "data communication network" vorgesehen. Neben dem eigentlichen "occupancy sensor" weist der "multifunction sensor" einen "ambient light sensor" und einen "temperature sensor" auf.

Der Erfindung liegt die Aufgabe zugrunde, einen Anwesenheitsmelder für begrenzte Erfassungsbereiche anzugeben.

Diese Aufgabe wird erfindungsgemäß gelöst durch einen Anwesenheitsmelder mit einer Erfassungseinheit und einer Schalt- oder Meldeeinheit, wobei die Erfassungseinheit eine Auswerteeinheit besitzt,
- welche eingangsseitig mit einem Thermopileelement und mit einem Dämmerungsschalter verbunden ist, welcher eine Einstellvorrichtung für eine Dämmerungsschwelle aufweist und an welchen eingangsseitig ein Tageslichtsensor angeschlossen ist,
- welche ausgangsseitig mit einem Zeitglied verbunden ist, welche eine Einstellvorrichtung für eine Ausschaltverzögerung aufweist und welche ausgangsseitig einen Schaltbefehl oder Meldebefehl für die Schalt- oder Meldeeinheit abgibt.

Die mit der Erfindung verbundenen Vorteile bestehen insbesondere darin, dass eine echte Anwesenheitserkennung anstatt einer Bewegungsmeldung realisiert wird, wodurch z. B. eine Leuchte sofort abgeschaltet werden kann, sobald eine Person den Erfassungsbereich verlässt. Folglich ist eine wesentliche höhere Energieeffizienz erzielbar als bei herkömmlichen Bewegungsmeldern. Der vorgeschlagene Anwesenheitsmelder ist überall einsetzbar, wo nicht die Bewegung, sondern alleine die Anwesenheit von Personen oder Wärmequellen erkannt werden soll. Die Auswertung ist einfach, ohne Zählen (von Ereignissen) oder Erfassen der Bewegungsrichtung. Durch Auftrennung des Anwesenheitsmelders in zwei separate Geräte - Erfassungseinheit mit Thermopileelement einerseits und Schalteinheit oder Meldeeinheit andererseits - wird ein modularer Aufbau erzielt, wodurch eine optimale und flexible Nutzung / Anwendung für verschiedenartige Anwendungsfälle gegeben ist. Die Verbindung zwischen Erfassungseinheit und Schalteinheit oder Meldeeinheit kann sowohl über Funk als auch über eine Leitung erfolgen.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1, 2: zwei Basis-Ausführungsformen einer Erfassungseinheit eines Anwesenheitsmelders für drahtlose und leitungsgebundene Anwendungen,
- Fig. 3, 4: eine mit einem elektronischen Installationsschalter als Schalteinheit zusammenarbeitende Erfassungseinheit eines Anwesenheitsmelders,
- Fig. 5, 6: eine mit einem Bewegungsmelder als Schalteinheit zusammenarbeitende Erfassungseinheit eines Anwesenheitsmelders,
- Fig. 7, 8: eine mit einem Anzeigegerät als Meldeeinheit eines Meldesystems zusammenarbeitende Erfassungseinheit eines Anwesenheitsmelders.,
- Fig. 9: ein Anwendungsbeispiel "Toilettenanlage" eines öffentlichen Gebäudes,
- Fig. 10: ein Anwendungsbeispiel "Gäste-WC".

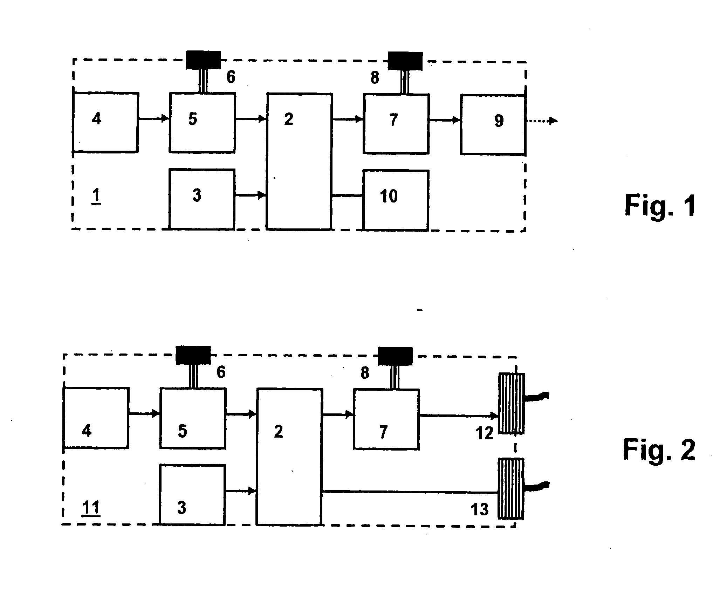

In den Fig. 1 bzw. 2 sind zwei Basis-Ausführungsformen einer Erfassungseinheit eines Anwesenheitsmelders für drahtlose bzw. leitungsgebundene Anwendungen dargestellt. In Fig. 1 ist eine drahtlose Erfassungseinheit 1 gezeigt, welche eine Auswerteeinheit 2 besitzt, die eingangsseitig mit einem Thermopileelement 3 und mit einem Dämmerungsschalter 5 sowie ausgangsseitig mit einem Zeitglied 7 verbunden ist. Der Dämmerungsschalter 5 ist eingangsseitig mit einem Tageslichtsensor 4 verbunden und weist eine Einstellvorrichtung 6 zur Einstellung der Dämmerungsschwelle auf. Das Zeitglied 7 ist ausgangsseitig mit einem Funkmodul 9 verbunden und weist eine Einstellvorrichtung 8 zur Einstellung der Ausschaltverzögerung (Nachlaufzeit) auf. Eine Batterie 10 dient zur Energieversorgung der Baukomponenten der Erfassungseinheit 1. Damit ist die Erfassungseinheit 1 vorteilhaft autark.

In Fig. 2 ist eine leitungsgebundene Erfassungseinheit eines Anwesenheitsmelders gezeigt, welche bezüglich der Konfiguration Auswerteeinheit 2 / Thermopileelement 3 / Tageslichtsensor 4 / Dämmerungsschalter 5 / Einstellvorrichtung 6 / Zeitglied 7 / Einstellvorrichtung 8 gleichartig der vorstehend beschriebenen Erfassungseinheit 1 ist. Im Unterschied zur Erfassungseinheit 1
- ist das Zeitglied 7 der Erfassungseinheit 11 mit einem Ausgangsanschluss 12 verbunden,
- besitzt die Erfassungseinheit 11 einen mit einem Versorgungsspannungsnetz zu verbindenden Spannungsversorgungsanschluss 13 zur Energieversorgung seiner Baukomponenten.
Das Funkmodul 9 entfällt.

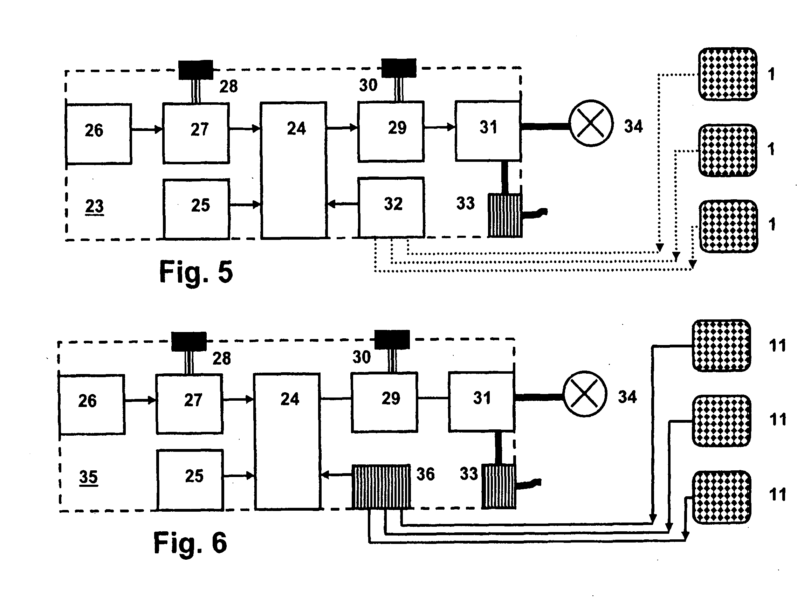

Das Thermopileelement 3 erfasst die Temperatur (Wärmequelle) im Erfassungsbereich. Eine Bewegung ist nicht erforderlich (im Unterschied zu üblichen Bewegungs- oder Präsenzmeldern). Die mittels des Thermopileelements 3 realisierte Sensorfunktion ist zum Schalten und/ oder Melden verwendbar. Eine Integration in ein Meldesystem ist möglich, wie nachfolgend unter den Fig. 5, 6 näher erläutert wird. Allgemein gilt für beide Ausführungsformen der Erfassungseinheit 1, 11, dass mit dem Thermopileelement 3 nur relativ kleine Flächen / Räume überwacht werden können, insbesondere definierte räumliche Begrenzungen, z. B. ein Gäste-WC. Das Thermopileelement 3 misst die Temperaturerhöhung innerhalb eines begrenzten Erfassungsbereiches. Dabei kann die Temperaturerhöhung sowohl durch eine Person oder durch ein Tier als auch durch einen erwärmten Gegenstand, wie z. B. eine Herdplatte oder ein Bügeleisen erfolgen. In der Erfassungseinheit 1, 11 wird das Signal des Thermopileelements 3 mittels der Auswerteeinheit 2 ausgewertet, während ein entfernt von der Erfassungseinheit angeordnete Schalteinheit (Lastschaltglied mit Relais oder Triac) einen angeschlossenen Verbraucher, z. B. eine Leuchte schaltet.

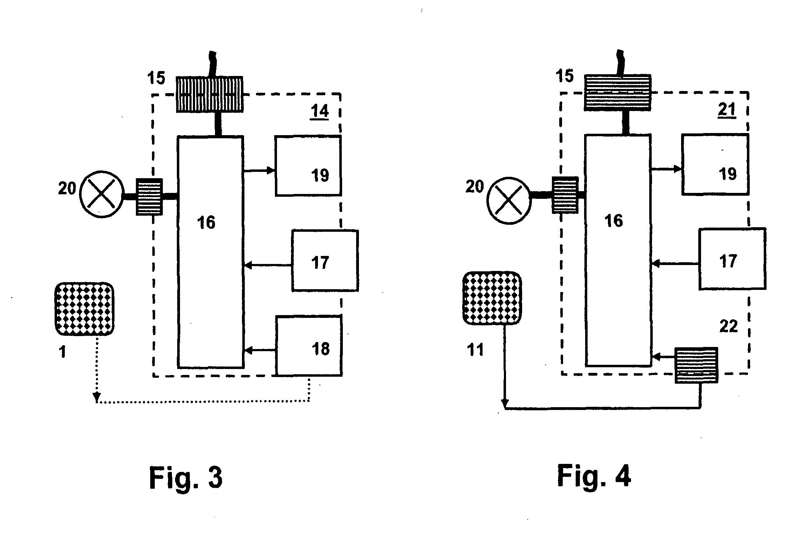

In den Fig. 3 bzw. 4 sind mit einem elektronischen Installationsschalter als Schalteinheit zusammenarbeitende Erfassungsmelder für drahtlose bzw. leitungsgebundene Anwendungen dargestellt. In Fig. 3 ist ein elektronischer Installationsschalter 14 gezeigt, der einen Aktor 16 besitzt, welcher mit einem mit einem Wechselspannungsnetz zu verbindenden Spannungsversorgungsanschluss 15, mit einem Betätigungselement 17, mit einem Funkmodul 18, mit einer Meldeeinheit 19 und über einen Anschluss mit einer Leuchte 20 verbunden ist. Das Funkmodul 18 kommuniziert drahtlos mit mindestens einer Erfassungseinheit 1.

In Fig. 4 ist ein elektronischer Installationsschalter 21 als Schalteinheit gezeigt, welcher bezüglich der Konfiguration Spannungsversorgungs-Anschluss 15 / Aktor 16 / Betätigungselement 17 / Meldeeinheit 19 gleichartig dem vorstehend beschriebenen Installationsschalter 14 ist und ebenfalls mit einer Leuchte 20 verbunden ist. Im Unterschied zum elektronischen Installationsschalter 14 besitzt der Aktor 16 einen Meldeanschluss 22 für die Verbindung mit einer Leitung mindestens einer Erfassungseinheit 11. Das Funkmodul 18 entfällt.

In den Fig. 5 bzw. 6 sind mit einem Bewegungsmelder als Schalteinheit zusammenarbeitende Erfassungseinheiten für drahtlose bzw. leitungsgebundene Anwendungen dargestellt. In Fig. 5 ist ein Bewegungsmelder 23 gezeigt, der eine Auswerteeinheit 24 besitzt, welche eingangsseitig mit einem Infrarot-Sensor 25 und mit einem Dämmerungsschalter 27 sowie ausgangsseitig mit einem Zeitglied 29 und mit einem Funkmodul 32 verbunden ist. Der Dämmerungsschalter 27 ist eingangsseitig mit einem Tageslichtsensor 26 verbunden und weist eine Einstellvorrichtung 28 zur Einstellung der Dämmerungsschwelle auf. Das Zeitglied 29 ist ausgangsseitig mit einem Schaltglied (Lastschaltglied) 31 verbunden und weist eine Einstellvorrichtung 30 zur Einstellung der Ausschaltverzögerung (Nachlaufzeit) auf. Ein mit einem Wechselspannungsnetz zu verbindender Spannungsversorgungsanschluss 33 ist mit dem Eingang des Schaltglieds 31 verbunden und dient zudem zur Energieversorgung der Baukomponenten des Bewegungsmelders. An den Ausgang des Schaltglieds 31 ist eine Leuchte 34 angeschlossen. Das Funkmodul 32 kommuniziert drahtlos mit mindestens einer Erfassungseinheit 1.

In Fig. 6 ist ein Bewegungsmelder 35 als Schalteinheit gezeigt, welcher bezüglich der Konfiguration Auswerteeinheit 24 / Infrarot-Sensor 25 / Tageslichtsensor 26 / Dämmerungsschalter 27 / Einstellvorrichtung 28 / Zeitglied 29 / Einstellvorrichtung 30 / Schaltglied 31 und Spannungsversorgungs-Anschluss 33 gleichartig dem vorstehend beschriebenen Bewegungsmelder 33 ist und dessen Schaltglied 31 ebenfalls mit einer Leuchte 34 verbunden ist. Im Unterschied zum Bewegungsmelder 23 besitzt die Auswerteeinheit 24 des Bewegungsmelders 35 einen Meldeanschluss 36 für die Verbindung mit einer Leitung mindestens einer Erfassungseinheit 11. Das Funkmodul 32 entfällt.

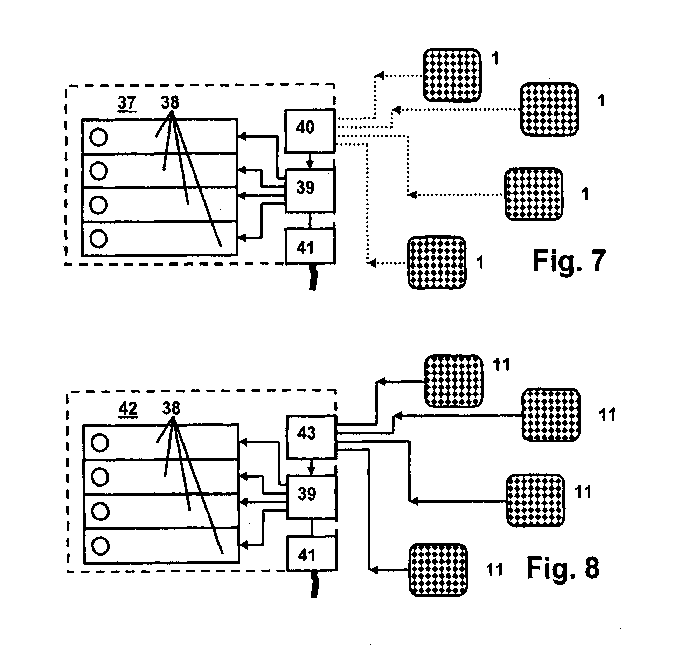

In den Fig. 7 und 8 sind mit einem Anzeigegerät als Meldeeinheit eines Meldesystems zusammenarbeitende Erfassungseinheiten für drahtlose bzw. leitungsgebundene Anwendungen dargestellt. In Fig. 7 ist ein Anzeigegerät 37 gezeigt, welches mindestens eine Meldeeinheit 38 mit zugeordneter Ansteuereinheit 39 besitzt, wobei ein Funkmodul 40 an die Ansteuereinheit 39 angeschlossen ist. Ein mit einem Wechselspannungsnetz zu verbindender
Spannungsversorgungsanschluss 41 dient zur Energieversorgung der Baukomponenten des Anzeigegeräts 37. Das Funkmodul 40 kommuniziert drahtlos mit mindestens einer Erfassungseinheit 1.

In Fig. 8 ist ein Anzeigegerät 42 als Meldeeinheit gezeigt, welches bezüglich der Konfiguration Meldeeinheit(en) 28 / Ansteuereinheit 39 / Spannungsversorgungsanschluss 41 gleichartig mit dem vorstehend beschriebenen Anzeigegerät 37 ist. Im Unterschied zum Anzeigegerät 37 besitzt das Anzeigegerät 42 einen Meldeanschluss 43 für eine Leitung mit mindestens einer Erfassungseinheit 11. Das Funkmodul 40 entfällt.

Anwendungsbeispiele für die Ausführungsbeispiele gemäß den Fig. 7, 8 sind:
- Bügelplatzüberwachung durch Montage einer Erfassungseinheit 1 oder 11 über einem Bügelbrett im Hauswirtschaftraum, das eingeschaltete Bügeleisen dient hierbei als detektierbare Wärmequelle,
- Herdüberwachung durch Montage einer Erfassungseinheit 1 oder 11 über dem Herd in der Küche, die Herdplatten dienen dabei als detektierbare Wärmequellen,
- Kleinkindüberwachung durch Montage einer Erfassungseinheit 1 oder 11 über dem Bett an der Zimmerdecke des Kinderzimmers,
- Überwachung von pflegebedürftigen, kranken oder älteren Personen durch Montage einer Erfassungseinheit 1 oder 11 über dem Bett an der Zimmerdecke,
- Tierüberwachung durch Montage einer Erfassungseinheit 1 oder 11 im Innenraum einer Hundehütte.

Die Meldebefehle der vorstehend erwähnten verschiedenen Erfassungseinheiten können dabei einem einzigen Anzeigegerät 37 oder 42 zugeleitet werden, welches mehrere separate Meldeeinheiten 38, wie "Bügeleisen", "Herd", "Bett", "Hund" aufweist, wobei eine rote Leuchtanzeige in einer Meldeeinheit 38 z. B. den Zustand "Herd eingeschaltet" und eine grüne Leuchtanzeige den Zustand "Herd ausgeschaltet" signalisiert. Weitere Anwendungen eines Anwesenheitsmelders sind im Bereich Gerontotechnik und im Behindertenbereich sinnvoll.

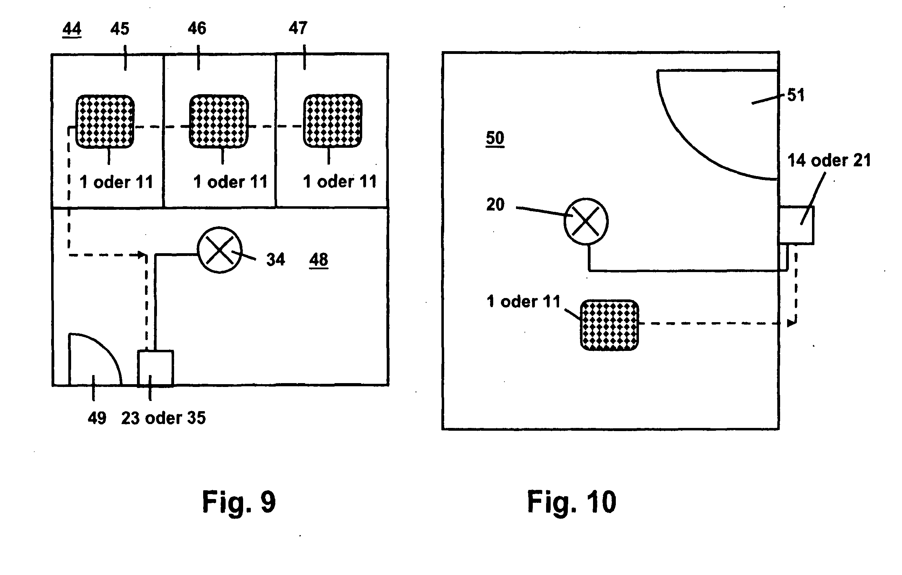

In Fig. 9 ist ein Anwendungsbeispiel "Toilettenanlage" zu den unter den Fig. 5 und 6 erläuterten Ausführungsbeispielen gezeigt. Es ist eine drei einzelne Toiletten 45, 46, 47 umfassende Toilettenanlage 44 in einer Schule oder in einem öffentlichen Gebäude zu erkennen, wobei der Zugang zu den einzelnen Toiletten 45, 46, 47 über einen Toilettenvorraum 48 erfolgt, welcher über eine Eingangstür 49 betreten wird und an seiner Decke eine Leuchte 34 aufweist. Innerhalb des Toilettenvorraums 48 ist ein Bewegungsmelder 23 oder 35 montiert, welcher die Leuchte 34 ein/ausschaltet. An der Decke ist direkt über jeder einzelnen Toilette 45, 46, 47 eine Erfassungseinheit 1 oder 11 montiert.

Sobald eine Person den Toilettenvorraum 48 betritt, schaltet der Bewegungsmelder 23 oder 35 die Leuchte 34 ein. Jede Erfassungseinheit 1 oder 11 überwacht die ihr zugeordnete Toilette und ist mit dem Bewegungsmelder 23 oder 35 über Kabel oder Funk verbunden. Bei Wärmeerkennung in einer einzelnen Toilette 45 - 47 wird der Bewegungsmelder 23 oder 35 durch die betreffende Erfassungseinheit 1 oder 11 nachgesteuert, so dass die Leuchte 34 nicht ausgeschaltet wird, wenn im Toilettenvorraum 48 keine Bewegung mehr detektiert wird. Der Bewegungsmelder 23 oder 35 schaltet die Leuchte 34 erst aus, wenn keine Bewegung im Toilettenvorraum 48 und (im Sinne einer UND-Verknüpfung) keine Wärmeerkennung in den einzelnen Toiletten 45 - 47 mittels der Erfassungseinheiten registriert wird. Vorteilhaft kann die Ausschaltverzögerung des Bewegungsmelders 23 oder 35 (siehe Zeitglied 29 mit Einstellvorrichtung 30) sehr kurz eingestellt werden, da im Toilettenvorraum 48 üblicherweise genügend Bewegung vorhanden ist. Selbstverständlich kann auch die Ausschaltverzögerung der Erfassungseinheit 1 oder 11 (siehe Zeitglied 7 mit Einstellvorrichtung 8) sehr kurz eingestellt werden.

In Fig. 10 ist ein Anwendungsbeispiel "Gäste-WC" zu den unter den Fig. 3 und 4 erläuterten Ausführungsbeispielen gezeigt. Es ist ein Gäste-WC 50 zu erkennen, welches über eine Eingangstür 51 betreten wird und an seiner Decke eine Leuchte 20 aufweist. Eine Erfassungseinheit 1 oder 11 überwacht das Gäste-WC 50 und ist mit einem außerhalb des Gäste-WCs angeordneten elektronischen Installationsschalter 14 oder 21 über Kabel oder Funk verbunden.

Sobald eine Person das Gäste-WC 50 betritt, registriert die Erfassungseinheit 1 oder 11 einen Wärmezuwachs und folglich wird die Leuchte 20 über den elektronischen Installationsschalter 14 oder 21 eingeschaltet. Eine manuelle Betätigung des Installationsschalters 14 oder 21 ist nicht erforderlich. Die Leuchte 20 bleibt eingeschaltet, solange sich eine Person im Gäste-WC 50 aufhält, unabhängig von deren Bewegung. Bei eingeschalteter Leuchte 20 wird über die Meldeeinheit 19 des elektronischen Installationsschalters 14 oder 21 (siehe Fig. 3, 4) eine "Besetztmeldung" angezeigt. Nach Verlassen des Gäste-WCs 50 detektiert die Erfassungseinheit 1 oder 11 eine Wärmereduktion und folglich wird die Leuchte 20 sofort respektive nach Ablauf der vorgegebenen sehr kurzen Ausschaltverzögerung (siehe Zeitglied 7 mit Einstellvorrichtung 8) ausgeschaltet. Es ist keine Nachlaufzeit notwendig.

### Bezugszeichenliste

- 1: Erfassungseinheit
- 2: Auswerteeinheit
- 3: Thermopileelement
- 4: Tageslichtsensor
- 5: Dämmerungsschalter
- 6: Einstellvorrichtung für Dämmerungsschwelle
- 7: Zeitglied
- 8: Einstellvorrichtung für Ausschaltverzögerung
- 9: Funkmodul
- 10: Batterie
- 11: Erfassungseinheit
- 12: Ausgangsanschluss
- 13: Spannungsversorgungs-Anschluss
- 14: elektronischer Installationsschalter
- 15: Spannungsversorgungs-Anschluss
- 16: Aktor
- 17: Betätigungselement
- 18: Funkmodul
- 19: Meldeeinheit
- 20: Last, z. B. Leuchte
- 21: elektronischer Installationsschalter
- 22: Schaltbefehlanschluss
- 23: Bewegungsmelder
- 24: Auswerteeinheit
- 25: Infrarot-Sensor
- 26: Tageslichtsensor
- 27: Dämmerungsschalter
- 28: Einstellvorrichtung für Dämmerungsschwelle
- 29: Zeitglied
- 30: Einstellvorrichtung für Ausschaltverzögerung
- 31: Schaltglied
- 32: Funkmodul
- 33: Spannungsversorgungs-Anschluss
- 34: Last, z. B. Leuchte
- 35: Bewegungsmelder
- 36: Schaltbefehlanschluss
- 37: Anzeigegerät eines Meldesystems
- 38: Meideeinheiten
- 39: Ansteuereinheit
- 40: Funkmodul
- 41: Spannungsversorgungs-Anschluss
- 42: Anzeigegerät eines Meldesystems
- 43: Meldebefehlanschluss
- 44: Toilettenanlage
- 45: erste Toilette
- 46: zweite Toilette
- 47: dritte Toilette
- 48: Toilettenvorraum
- 49: Eingangstür
- 50: Gäste-WC
- 51: Eingangstür

## Patentansprüche

1. Anwesenheitsmelder mit einer Erfassungseinheit (1) und einer Schalteinheit (23), wobei die Erfassungseinheit (1) eine Auswerteeinheit (2) besitzt,
- welche eingangsseitig mit einem Thermopileelement (3) und mit einem Dämmerungsschalter (5) verbunden ist, welcher eine Einstellvorrichtung (6) für eine Dämmerungsschwelle aufweist und an welchen eingangsseitig ein Tageslichtsensor (4) angeschlossen ist,
- welche ausgangsseitig mit einem Zeitglied (7) verbunden ist, welche eine Einstellvorrichtung (8) für eine Ausschaltverzögerung aufweist und welche ausgangsseitig einen Schaltbefehl für die Schalteinheit (23) abgibt,
- wobei Erfassungseinheit (1) und Schalteinheit (23) räumlich voneinander getrennte, modulare Baukomponenten sind,
- wobei ein Funkmodul (9) an den Ausgang des Zeitglieds (7) der Erfassungseinheit (1 ) angeschlossen ist und der Schaltbefehl über eine Funkstrecke zu einem Funkmodul (32) der Schalteinheit (23) gelangt,
- wobei ein Bewegungsmelder als Schalteinheit (23) verwendet ist, welcher eine Auswerteeinheit (24) aufweist, die von der Erfassungseinheit (1) über das Funkmodul (32) ansteuerbar ist.

2. Anwesenheitsmelder nach Anspruch 1, **dadurch gekennzeichnet, dass** eine Batterie (10) zur Energieversorgung der Bauteile der Erfassungseinheit (1) dient.

3. Anwesenheitsmelder mit einer Erfassungseinheit (11) und einer Schalteinheit (35), wobei die Erfassungseinheit (11) eine Auswerteeinheit (2) besitzt,
- welche eingangsseitig mit einem Thermopileelement (3) und mit einem Dämmerungsschalter (5) verbunden ist, welcher eine Einstellvorrichtung (6) für eine Dämmerungsschwelle aufweist und an welchen eingangsseitig ein Tageslichtsensor (4) angeschlossen ist,
- welche ausgangsseitig mit einem Zeitglied (7) verbunden ist, welche eine Einstellvorrichtung (8) für eine Ausschaltverzögerung aufweist und welche ausgangsseitig einen Schaltbefehl für die Schalteinheit (35) abgibt,
- wobei Erfassungseinheit (11) und Schalteinheit (35) räumlich voneinander getrennte, modulare Baukomponenten sind,
- wobei das Zeitglied (7) der Erfassungseinheit (11) mit einem Ausgangsanschluss (12) versehen ist, welcher über eine Leitung mit einem Schaltbefehlanschluss (36) der Schalteinheit (35) verbindbar ist,
- wobei ein Bewegungsmelder als Schalteinheit (35) verwendet ist, welcher eine Auswerteeinheit (24) aufweist, die über den Schaltbefehlanschluss (36) mit dem Ausgangsanschluss (12) der Erfassungseinheit (11) verbindbar ist.

4. Anwesenheitsmelder nach Anspruch 3, **dadurch gekennzeichnet, dass** ein Spannungsversorgungsanschluss (13) zur Energieversorgung der Bauteile der Erfassungseinheit (11) dient.

## Claims

1. A presence detector, comprising a detection unit (1) and a switching unit (23), with the detection unit (1) comprising an evaluation unit (2)
- which is connected on the input side with a thermopile element (3) and a light-sensitive switch (5) which comprises an adjusting apparatus (6) for a twilight threshold and to which a daylight sensor (4) is connected on the input side;
- which is connected on the output side with a timing element (7) which comprises an adjusting apparatus (8) for a switch-off delay and which supplies a switching command on the output side for the switching unit (23);
- with the detection unit (1) and the switching unit (23) being modular components which are spatially separated from one another;
- with a radio module (9) being connected to the output of the timing element (7) of the detection unit (1) and the switching command reaches a radio module (32) of the switching unit (23) via a radio link;
- with a motion detector being used as a switching unit (23) which comprises an evaluation unit (24) which can be triggered by the detection unit (1) via the radio module (32).

2. A presence detector according to claim 1, **characterized in that** a battery (10) is used for power supply of the components of the detection unit (1).

3. A presence detector, comprising a detection unit (11) and a switching unit (35), with the detection unit (11) comprising an evaluation unit (2)
- which is connected on the input side with a thermopile element (3) and a light-sensitive switch (5) which comprises an adjusting apparatus (6) for a twilight threshold and to which a daylight sensor (4) is connected on the input side;
- which is connected on the output side with a timing element (7) which comprises an adjusting apparatus (8) for a switch-off delay and which supplies a switching command on the output side for the switching unit (23);
- with the detection unit (11) and the switching unit (35) being modular components which are spatially separated from one another;
- with the timing element (7) of the detection unit (11) being provided with an output connection (12) which is connectible via a line with a switching-command connection (36) of the switching unit (35);
- with a motion detector being used as a switching unit (35) which comprises an evaluation unit (24) which is connectible via the switching-command connection (36) with the output connection (12) of the detection unit (11).

4. A presence detector according to claim 3, **characterized in that** a voltage-supply connection (13) is used for the power supply of the components of the detection unit (11).

## Revendications

1. Détecteur de présence avec une unité de détection (1) et une unité de commutation (23), dans lequel l'unité de détection (1) possède une unité d'analyse (2),
- qui est connectée à l'entrée à un élément de thermopile (3) et à un interrupteur crépusculaire (5) qui présente un dispositif de réglage (6) pour un seuil crépusculaire et à l'entrée duquel un capteur de lumière du jour (4) est connecté,
- qui est connectée à la sortie à un élément temporisateur (7) qui présente un dispositif de réglage (8) pour une temporisation d'arrêt et qui émet à la sortie un ordre de commutation pour l'unité de commutation (23),
- dans lequel l'unité de détection (1) et l'unité de commutation (23) sont des composants constitutifs modulaires séparés dans l'espace,
- dans lequel un module radio (9) est connecté à la sortie de l'élément temporisateur (7) de l'unité de détection (1) et l'ordre de commutation parvient à l'unité de commutation (23) en passant par un trajet d'ondes radio vers un module radio (32),
- dans lequel un capteur de mouvement est utilisé comme unité de commutation (23) et présente une unité d'analyse (24) qui peut être activée par l'unité de détection (1) par l'intermédiaire du module radio (32).

2. Détecteur de présence selon la revendication 1, **caractérisé en ce qu'**une batterie (10) sert à l'alimentation en énergie des composants de l'unité de détection (1).

3. Détecteur de présence avec une unité de détection (11) et une unité de commutation (35), dans lequel l'unité de détection (11) possède une unité d'analyse (2),
- qui est connectée à l'entrée à un élément de thermopile (3) et à un interrupteur crépusculaire (5) qui présente un dispositif de réglage (6) pour un seuil crépusculaire et à l'entrée duquel un capteur de lumière du jour (4) est connecté,
- qui est connectée à la sortie à un élément temporisateur (7) qui présente un dispositif de réglage (8) pour une temporisation d'arrêt et qui émet à la sortie un ordre de commutation pour l'unité de commutation (35),
- dans lequel l'unité de détection (11) et l'unité de commutation (35) sont des composants constitutifs modulaires séparés dans l'espace,
- dans lequel l'élément temporisateur (7) de l'unité de détection (11) est muni d'une connexion de sortie (12) qui peut être connectée par une ligne à une connexion d'ordre de commutation (36) de l'unité de commutation (35),
- dans lequel un détecteur de mouvement est utilisé comme unité de commutation (35) et présente une unité d'analyse (24) qui peut être connectée par la connexion d'ordre de commutation (36) à la connexion de sortie (12) de l'unité de détection (11).

4. Détecteur de présence selon la revendication 3, **caractérisé en ce qu'**une connexion d'alimentation électrique (13) sert à l'alimentation en énergie des composants de l'unité de détection (11).
